Europäisches Patentamt

European Patent Office

Office européen des brevets

(11) Veröffentlichungsnummer: **0 153 463**
**B1**

(12) **EUROPÄISCHE PATENTSCHRIFT**

(45) Veröffentlichungstag der Patentschrift:
**10.01.90**

(51) Int. Cl.⁴: **E 04 C 2/34,** F 16 B 5/08

(21) Anmeldenummer: **84115004.8**

(22) Anmeldetag: **08.12.84**

(54) **Plattenelement aus Hohlkammer-Profilen.**

(30) Priorität: **01.02.84 DE 8402847 U**

(43) Veröffentlichungstag der Anmeldung:
**04.09.85 Patentblatt 85/36**

(45) Bekanntmachung des Hinweises auf die Patenterteilung:
**10.01.90 Patentblatt 90/2**

(84) Benannte Vertragsstaaten:
**BE DE FR GB NL**

(56) Entgegenhaltungen:
EP-A- 0 050 462
DE-A- 2 636 858
DE-A- 3 302 105
DE-B- 2 326 746
DE-B- 2 510 211
DE-B- 2 552 622
FR-A- 2 080 351

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Hohmann, Claus, Merianstrasse 16, D-8850 Donauwörth (DE)**

## Beschreibung

Die Erfindung bezieht sich auf ein Plattenelement entsprechend dem Gattungsbegriff des Anspruchs 1.

Bei einem derartigen Plattenelement gemäß der DE-B-2 510 211 weisen die Deckbleche an einer Schmalseite des Hohlkammerprofils nahe von ihren Enden nach außen gerichtete Wülste und dahinter Nuten auf, während an der entgegengesetzten Schmalseite die Deckbleche in nach innen gerichtete Haken auslaufen, die entspechend den Nuten geformt sind. Beim Zusammenbau von zwei Hohlkammer-Profilen zu einem Plattenelement greifen die Haken des einen Hohlkammer-Profils in die Nuten des anderen Hohlkammer-Profils, wobei zwischen den beiden Profilen nach außen hin keilförmige Spalte verbleiben, die durch die Formgebung des Hakens bedingt sind. Zur festen Verbindung der beiden Hohlkammer-Profile wird das Material der Wülste in die Spalte hineingestaucht. Diese Art der Fertigung ist nicht zur Übertragung von großen Kräften zwischen den Hohlkammer-Profilen geeignet, weil durch das Stauchen keine innige Verbindung zu erzielen ist. Außerdem kann durch die Stauchrisse Feuchtigkeit in das Innere der Profile diffundieren, wodurch bei im Freien verwendeten Plattenelementen die Gefahr von Korrosion besteht.

Weiterhin ist in der DE-A-3 302 105 ein schnell zusammenfügbares Bauprofil beschrieben, welches aus mehreren gleichen Profilen zusammensetzbar ist. Die Profile sind an den Enden mit in Verlängerung ihrer Ober- und Unterseiten angeordneten Ansätzen, Haken und Nuten versehen. Zum Zusammenbau von zwei Profilen werden die an der Unterseite befindlichen Haken und Nuten zusammengesteckt, die an der Oberseite vorhandenen Ansätze durch Kippen der Stege zusammengeschoben und letztere durch eine Nut miteinander verbunden. Die derart hergestellten Profile sind auch nur für gering belastete Bauelemente geeignet und ebenfalls nicht korrosionsfest.

Es ist die Aufgabe der Erfindung, ein Plattenelement der gattungsgemäßen Art zu schaffen, welches nach dem Zusammenbau der Hohlkammer-Profile eine auch für hohe Belastungen ausreichende Festigkeit aufweist, gegen Innenkorrosion geschützt ist und leicht zu fertigen ist.

Die Lösung der Aufgabe erfolgt erfindungsgemäß mit den Merkmalen des kennzeichnenden Teils des Anspruchs 1. Weiterbildungen der Erfindung sind in den Unteransprüchen wiedergegeben.

Der wesentliche Vorteil der Erfindung besteht darin, daß die Ansätze an den Schmalseiten der Hohlkammer-Profile schweißgerecht ausgebildet sind, so daß nach dem Zusammensetzen von zwei Hohlkammer-Profilen je ein oberer und unterer Schweißspalt verbleibt, die ein leichtes Zusammenschweißen, insbesondere auch durch Automatenschweißung, ermöglichen. Das derart hergestellte Plattenelement ist hohen Beanspruchungen gewachsen und seine Innenteile sind absolut sicher gegen Korrosion geschützt. Zur Schweißung kann ein Schweißautomat direkt an den Schweißspalten entlangfahren und diese mit Schweißgut ausfüllen. Durch die unter den Schweißspalten vorhandenen Mulden ist eine wirksame Schweißbadsicherung gegeben.

Die Erfindung wird nachfolgend anhand eines in der Zeichnung dargestellten Ausführungsbeispiels näher beschrieben. Es zeigen:

Fig. 1 eine Teilansicht eines Plattenelementes aus zusammengeschweißten Hohlkammer-Profilen;

Fig. 2 eine vergrößerte Darstellung des Punktes II aus Fig. 1 vor dem Schweißen und

Fig. 3 eine perspektivische Teilansicht eines Hohlkammer-Profils.

Ein Plattenelement 1 besteht aus Hohlkammer-Profilen 2, die durch Schweißnähte 3 miteinander verbunden sind. Die Profile 2 sind bevorzugt als Preßprofile aus Aluminium hergestellt. Durch die Anordnung von dünnen Deckblechen 4 und Stegen 5 ist das Plattenelement 1 als orthotrope Platte ausgeführt, das heißt, die Platte ist in Richtung der Stege 5 sehr steif und quer dazu verhältnismäßig weich. Diese Anordnung gibt für bestimmte Anwendungen, z.B. als Wandelemente von Chassisaufbauten im Fahrzeugbau oder als Kabinenwände, optimale Festigkeitsbedingungen mit idealen Belastungsmöglichkeiten. Weiterhin sind die verwendeten Hohlkammer-Preßprofile 2 gegenüber genieteten oder geschraubten Strukturen sehr sparsam in der Fertigung, mit geringen Wartungskosten verbunden und nahezu korrosionsfrei, so daß die daraus hergestellten Plattenelemente eine hohe Lebensdauer haben.

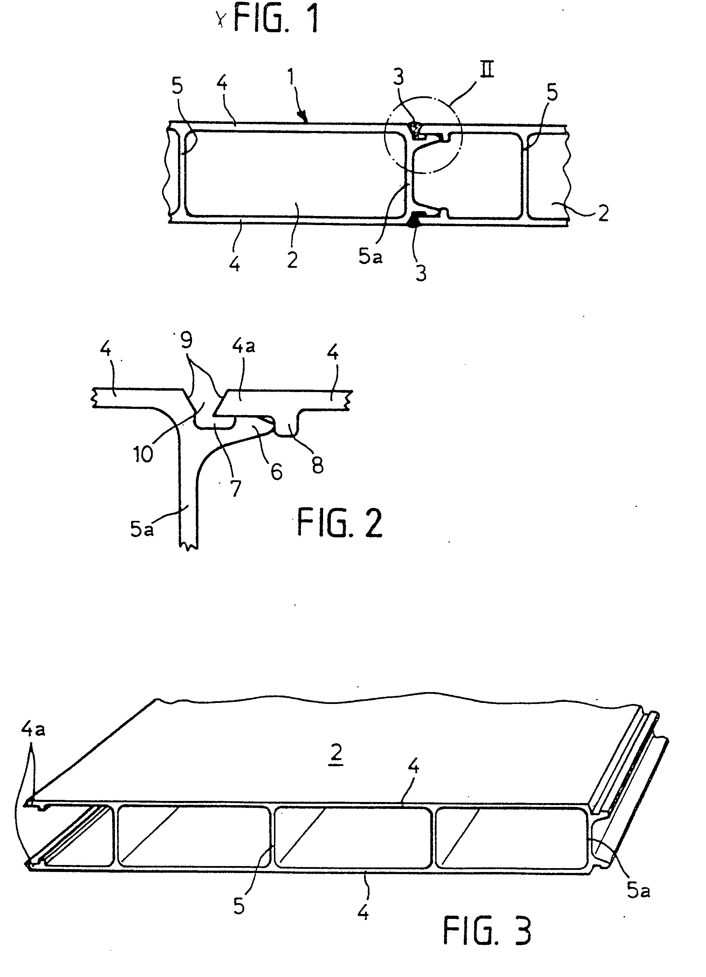

Das Zusammensetzen der Profile 2 vor dem Schweißen ist in der vergrößerten Darstellung der Figur 2 gezeigt. An einer Schmalseite ist das Profil 2 mit einem Endsteg 5a abgeschlossen, an dem nach außen hin nasenähnliche Vorsprünge 6 angesetzt sind, die noch Mulden 7 zur Schweißbadsicherung aufweisen. An der gegenüberliegenden Schmalseite ist das Profil 2 offen und weist vor seiner Endkante längsverlaufende Wülste 8 auf, die aus der Unterseite der Deckbleche 4 hervorkommen und zwischen sich und der Profilkante einen verstärkten Deckblechrand 4a zulassen. Die Kante des Deckblechrandes 4a und die gegenüberliegende Kante des Endsteges 5a weisen Schrägen 9 für die Schweißnähte 3 auf. Wie ersichtlich können durch die Anordnung der Vorsprünge 6 und der Wülste 8 je zwei Profile 2 jeweils schnell und passend zur Schweißvorbereitung zusammengesteckt werden, wobei automatisch der Schweißspalt 10 definiert ist.

## Patentansprüche

1. Ebenes Plattenelement (1) aus mindestens zwei Hohlkammer-Profilen (2), die mit je einem oberen und unteren Deckblech (4) und mindestens zwei dazwischen vorhandenen Stegen (5) versehen sind, die mit Hilfe von anden Schmalseiten der Hohlkammer-Profile (2) in Verlängerung der Deckbleche angeordneten Ansätzen (6, 8) miteinander zu verbinden sind, und die an einer Schmalseite einen Endsteg (5a) und an der gegenüberliegenden Schmalseite offene Deckbleche (4) aufweisen, wodurch zwischen den verbundenen Hohlkammer-Profilen (2) eine Hohlkammer entsteht, dadurch gekennzeichnet, daß die Ansätze an den Schmalseiten der Hohlkammer-Profile (2) zum Verbinden durch Schweißung auf einer Seite nasenähnliche Vorsprünge (6) mit unterhalb der Ebene der Deckbleche (4) angeordneten Auflageflächen und an der entgegengesetzten Seite nahe den Enden der Deckbleche (4) als nach innen gerichtete Wülste (8) ausgebildet sind, wobei nach dem Zusammenfügen von zwei Hohlkammer-Profilen (2) die Enden der Deckbleche (4a) des einen Hohlkammer-Profils auf den Auflageflächen der nasenähnlichen Vorsprünge (6) des anderen Hohlkammer-Profils bis zu ihrem Anschlag an die Wülste (8) zu liegen kommen und wobei zwischen den Deckblechen (4) der beiden Hohlkammer-Profile (2) je ein oberer und unterer Schweißspalt (10) verbleibt.

2. Plattenelement nach Anspruch 1, dadurch gekennzeichnet, daß die nasenähnlichen Vorsprünge (6) an der den Endsteg (5a) aufweisenden Schmalseite des Hohlkammerprofils (2) und die Wülste (8) an der entgegengesetzten Schmalseite mit den offenen Deckblechen (4) angeordnet sind.

3. Plattenelement nach den Ansprüchen 1 und 2, dadurch gekennzeichnet, daß die die Schweißspalte (10) bildenden Kanten der Hohlkammer-Profile (2) mit Schrägen (9) versehen sind.

4. Plattenelement nach den Ansprüchen 1 bis 3, dadurch gekennzeichnet, daß unterhalb der Schweißspalten (10) in die nasenähnlichen Vorsprünge (6) Mulden (7) zur Schweißbadsicherung angeordnet sind.

5. Plattenelement nach den Ansprüchen 1 bis 4, dadurch gekennzeichnet, daß die Hohlkammer-Profile (2) als Preßprofile im Extrusionsverfahren aus Aluminium hergestellt sind.

## Claims

1. Level panel assembly (1) including at least two hollow-core profiles (2) which are each provided with one upper and lower cover sheet (4) and at least two bridges (5) therebetween which profiles are to be joined by way of protrusions (6, 8) disposed at the narrow sides of the hollow-core profile (2) as an extension of the cover sheets which have a terminal bridge (5a) at one narrow side and open cover sheets (4) at the opposite narrow side whereby a hollow core is created between the joined hollow-core profiles (2), characterised in that the protrusions at the narrow sides of the hollow-core profiles (2) have on the one side nose-shaped protrusions (6) with locating surfaces below the level of the cover sheets (4), and on the opposite side near the ends of the cover sheets (4) inwardly facing collars (8) whereby after joining of two hollow-core profiles (2) the ends of the cover sheets (4a) of the one hollow-core profile are positioned on the locating surfaces of the nose-shaped protrusions of the other hollow-core profile up to contact positon with the collars (8) and whereby respective upper and lower welding gaps (10) remain between the cover sheets (4) of the two hollow-core profiles (2).

2. Level panel assembly according to claim 1, characterised in that the nose-shaped protrusions (6) at the narrow side of the hollow-core profile (2) with terminal bridge (5a), and the collars (8) at the opposite narrow side include the open cover sheets (4).

3. Level panel assembly according to claims 1 and 2, characterised in that the edges of the hollow-core profiles (2) forming the welding gap (10) are shaped to be slanting (9).

4. Level panel assembly according to claims 1 to 3, characterised in that moulds (7) to secure surplus welding material are accommodated below the welding gaps (10) in the nose-shaped protrusions (6).

5. Level panel assembly according to claims 1 to 4, characterised in that the hollow-core profiles (2) are manufactured from aluminium as pressed profiles in an extrusion process.

## Revendications

1. Elément de panneau plan (1) composé d'au moins deux profilés en forme de caissons (2) qui comprennent respectivement des tôles de recouvrement supérieure et inférieure (4) et au moins deux entretoises (5) interposées entre celles-ci, qui peuvent être mutuellement raccordés à l'aide d'appendices (6, 8) disposés sur les petits côtés des profilés (2) dans le prolongement des tôles de recouvrement et qui, sur un petit côté, comportent une entretoise d'extrémité (5a) et, sur le petit côté opposé, des tôles de recouvrement ouvertes (4) créant ainsi un caisson entre les profilés assemblés (2), caractérisé par le fait que les appendices, prévus sur les petits côtés des profilés (2) pour, le raccordement par soudure, sont réalisés, d'un côté, sous forme de saillies (6) en forme de becs avec surface d'appui disposée en-dessous du plan des tôles de recouvrement (4) et, du côté opposé, à proximité des extrémités des tôles de recouvrement (4), sont réalisés sous forme de bourrelets (8) dirigés vers l'intérieur de telle sorte qu'après l'assemblage des deux profilés (2), les extrémités des tôles de recouvrement (4a) d'un profilé viennent s'appliquer sur les surfaces d'appui des saillies (6) en forme de becs de l'autre profilé jusqu'à leur butée sur les bourrelets (8) et qu'entre les tôles de recouvrement (4) des deux profilés (2), il subsiste respectivement une fente de soudage supérieure et inférieure (10).

2. Elément de panneau selon la revendication 1, caractérisé par le fait que les saillies (6) en forme de becs sont disposées sur le petit côté du profilé comportant l'entretoise d'extrémité (5a), et les bourrelets (8) sur le petit côté opposé comportant les tôles de recouvrement ouvertes (4).

3. Elément de panneau selon les revendications 1 et 2, caractérisé par le fait que les arêtes des profilés (2) formant la fente de soudage (10) sont munies de chanfreins (9).

4. Eléments de panneau selon les revendications 1 à 3, caractérisé par le fait que des cuvettes (7), destinées à retenir le bain de soudure, sont aménagées en-dessous des fentes (10) dans les saillies (6) en forme de becs.

5. Elément de panneau selon les revendications 1 à 4, caractérisé par le fait que les profilés (2) sont fabriqués sous forme de profilés en aluminium filés par extrusion.

FIG. 1

FIG. 2

FIG. 3